# EUROPEAN PATENT APPLICATION

(11) **EP 4 633 229 A1**
(43) Date of publication of application: **15.10.2025**
(21) Application number: 23900036.7
(22) Date of filing: 07.12.2023
(51) Int. Cl.: H04W 24/10

(54) **APERIODIC CLI REPORTING METHOD AND APPARATUS, AND COMPUTER-READABLE STORAGE MEDIUM**

(30) Priority: 07.12.2022 CN 202211566137
(71) Applicant: Spreadtrum Communications (Shanghai) Co., Ltd., Shanghai 201203 (CN)
(72) Inventor: ZHANG, Meng, Shanghai 201203 (CN)
(74) Representative: Bandpay & Greuter
(86) International application number: PCT/CN2023/136942
(87) International publication number: WO 2024/120463

(57) **Abstract**

Provided are an aperiodic CLI reporting method and apparatus, and a computer-readable storage medium. The method includes: receiving second information, where the second information includes indication information; determining a first resource according to the indication information, where the first resource is a resource configured for aperiodic CLI measurement. By means of the solution of the present disclosure, interference in a cellular network can be effectively handled, thereby improving the communication effect of the terminal.

## Description

The present application claims priority of Chinese Patent Application No. 202211566137.4, filed with the China National Intellectual Property Administration on December 7, 2022, and entitled "APERIODIC CLI REPORTING METHOD AND APPARATUS, COMPUTER-READABLE STORAGE MEDIUM", which is hereby incorporated by reference in its entirety.

### TECHNICAL FIELD

The present disclosure relates to the field of communication technologies, and, in particular, to an aperiodic CLI reporting method and apparatus, and a computer-readable storage medium.

### BACKGROUND

With the introduction of full duplex technology/dynamic time division duplex (Time Division Duplex, TDD) technology, an interference in a traditional cellular network will increase significantly. Therefore, how to deal with these interferences is the key to the successful commercialization of full duplex technology/dynamic TDD technology. At present, the commonly used interference processing method includes: a scheme based on power adjustment, a scheme based on beam adjustment and a scheme based on silence of some time slots, etc.

In order to deal with an interference better, the latest research proposes to add a Layer 1 (L1) cross link interference (CLI) reporting in addition to a traditional Layer 3 (L3) CLI report. However, this research is still in the concept stage, and there is no specific scheme to implement L1 CLI reporting at this stage, which leads to the existing technology still unable to deal with the interference problem well.

### SUMMARY

The technical problem solved by the present disclosure is how to deal with the interference problem in a cellular network.

In order to solve the above technical problem, an embodiment of the present disclosure provides an aperiodic CLI reporting method, including: receiving second information, where the second information includes indication information; and determining a first resource according to the indication information, where the first resource is a resource configured for aperiodic CLI measurement.

Optionally, the indication information is in one-to-one correspondence with the first resource.

Optionally, the method further includes receiving first information, where the first information includes configuration information of at least one first resource and indication information corresponding to each first resource.

Optionally, codepoints of the second information includes a first codepoint part and a second codepoint part, where the second information of the first codepoint part includes the indication information.

Optionally, the second information of the second codepoint part includes second resource request information.

Optionally, the second information includes a first domain and a second domain, where the first domain is configured to carry the indication information.

Optionally, the second domain is configured to carry second resource request information.

Optionally, identities associated with the second information includes a first identity part and a second identity part, where the second information associated with the first identity part includes the indication information.

Optionally, the second information associated with the second identity part includes second resource request information and a transmit power control command.

Optionally, the method further includes receiving the first resource to perform a CLI measurement; and sending a measurement report.

Optionally, the second information is carried by a high-layer signaling or an MAC-CE or DCI.

Optionally, the first resource is transmitted in a flexible slot.

In order to solve the above technical problem, an embodiment of the present disclosure also provides an aperiodic CLI reporting apparatus, including: a receiving module, configured to receive second information, where the second information includes indication information; and a determining module, configured to determine a first resource according to the indication information, where the first resource is a resource configured for aperiodic CLI measurement.

In order to solve the above technical problem, an embodiment of the present disclosure also provides an aperiodic CLI reporting method, including: sending second information, where the second information includes indication information; where the indication information is configured to indicate a first resource, and the first resource is a resource configured for aperiodic CLI measurement.

Optionally, the indication information is in one-to-one correspondence with the first resource.

Optionally, the method further includes sending first information, where the first information includes configuration information of at least one first resource and indication information corresponding to each first resource.

Optionally, codepoints of the second information include a first codepoint part and a second codepoint part, where the second information of the first codepoint part includes the indication information.

Optionally, the second information of the second codepoint part includes second resource request information.

Optionally, the second information includes a first domain and a second domain, where the first domain is configured to carry the indication information.

Optionally, the second domain is configured to carry second resource request information.

Optionally, identities associated with the second information includes a first identity part and a second identity part, where the second information associated with the first identity part includes the indication information.

Optionally, the second information associated with the second identity part includes second resource request information and a transmit power control command.

Optionally, the method further includes: sending the first resource; and receiving a measurement report.

Optionally, the second information is carried by a high-layer signaling or an MAC-CE or DCI.

Optionally, the first resource is transmitted in a flexible slot.

In order to solve the above technical problem, an embodiment of the present disclosure also provides an aperiodic CLI reporting apparatus, including: a sending module, configured to send second information, where the second information includes indication information; where the indication information is configured to indicate a first resource, and the first resource is a resource configured for aperiodic CLI measurement.

In order to solve the above technical problem, an embodiment of the present disclosure also provides a computer-readable storage medium which is a non-volatile storage medium or a non-transient storage medium, on which a computer program is stored, where the computer program, when executed by a processor, performs the steps of the above method.

In order to solve the above technical problem, an embodiment of the present disclosure also provides an aperiodic CLI reporting apparatus, including a memory and a processor, where a computer program which is able to be run on the processor is stored in the memory, where the processor executes the steps of the above method when running the computer program.

Compared with the prior art, the technical schemes of the embodiments of the present disclosure have the following beneficial effects.

On a terminal side, an embodiment of the present disclosure provides an aperiodic CLI reporting method, including: receiving second information, where the second information includes indication information; determining a first resource according to the indication information, where the first resource is a resource configured for aperiodic CLI measurement.

By adopting this embodiment, the first resource configured for aperiodic CLI reporting is determined according to the indication information, so that a terminal can truly implement L1 CLI reporting. Therefore, through the specific implementation of aperiodic L1 CLI reporting provided by this embodiment, interference in a cellular network can be effectively handled, and the communication effect of the terminal can be improved.

On a network device side, an embodiment of the present disclosure also provides an aperiodic CLI reporting method, including: sending second information, where the second information includes indication information; where the indication information is configured to indicate a first resource, and the first resource is a resource configured for aperiodic CLI measurement.

By adopting this embodiment, the indication mode of the first resource configured for aperiodic CLI reporting is clearly indicated to the terminal by carrying the indication information in the sent second information. Therefore, through the specific implementation of aperiodic L1 CLI reporting provided by this embodiment, a terminal can correctly perform LI CLI reporting, thus effectively handling interference in a cellular network and improving the communication effect of the terminal.

### BRIEF DESCRIPTION OF DRAWINGS

FIG. 1 is a flowchart of an aperiodic CLI reporting method according to a first embodiment of the present disclosure.
FIG. 2 is a schematic structural diagram of an aperiodic CLI reporting apparatus according to a second embodiment of the present disclosure.
FIG. 3 is a flowchart of an aperiodic CLI reporting method according to a third embodiment of the present disclosure.
FIG. 4 is a schematic structural diagram of an aperiodic CLI reporting apparatus according to a fourth embodiment of the present disclosure.
FIG. 5 is a signaling interaction diagram of a typical application scenario of an embodiment of the present disclosure.

### DESCRIPTION OF EMBODIMENTS

As mentioned in the background, there is no specific scheme to implement L1 CLI reporting at this stage, which leads to the existing technology still unable to deal with the interference problem well.

In order to solve the above technical problem, an embodiment of the present disclosure provides an aperiodic CLI reporting method, including: receiving second information, where the second information includes indication information; and determining a first resource according to the indication information, where the first resource a resource configured for aperiodic CLI measurement.

By adopting this embodiment, the first resource configured for aperiodic CLI reporting is determined according to the indication information, so that a terminal can truly implement L1 CLI reporting. Therefore, through the specific implementation of aperiodic L1 CLI reporting provided by this embodiment, interference in a cellular network can be effectively handled, and the communication effect of the terminal can be improved.

In order to make the above objects, features and beneficial effects of the present disclosure more obvious and easier to understand, specific embodiments of the present disclosure will be described in detail with reference to the accompanying drawings.

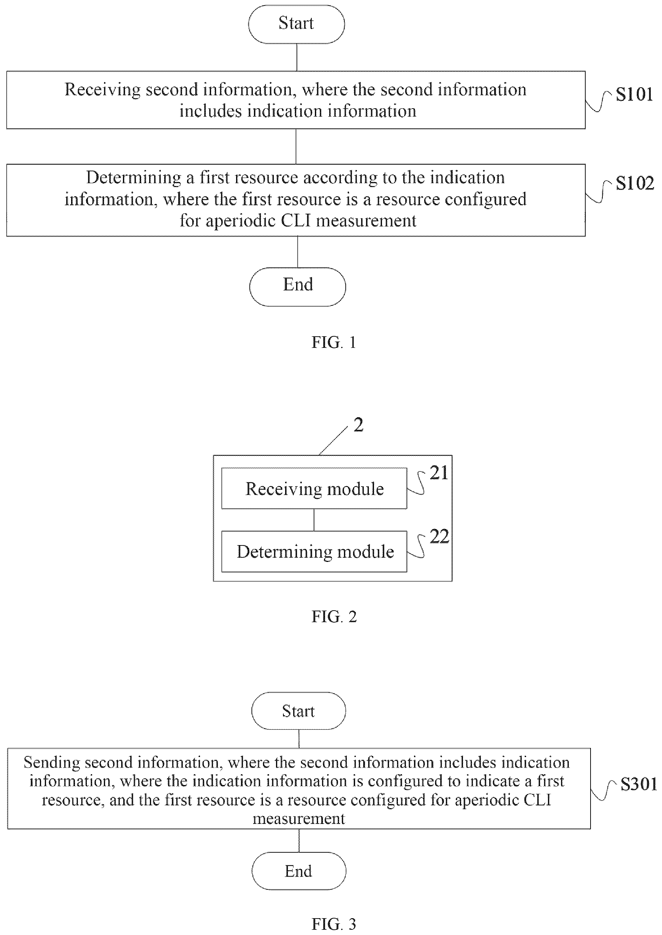

FIG. 1 is a flowchart of an aperiodic CLI reporting method according to a first embodiment of the present disclosure.

This embodiment can be applied to an interference processing application scenario, specifically, can be applied to an interference processing scenario in a cellular network that is adopting full duplex technology and/or dynamic TDD technology. Based on the existing periodic L3 CLI reporting, a terminal adopting this embodiment additionally adds an aperiodic LI CLI reporting to better handle the interference with other terminal(s)/network device(s).

In some embodiments, L3 CLI reporting may be periodic or event-triggered.

In some embodiments, L1 CLI reporting may be a periodic CLI reporting or a semi-persistent CLI reporting or an aperiodic CLI reporting. For example, L1 CLI reporting can be performed aperiodically, and a network device can instruct a terminal to perform a L1 CLI reporting when necessary. For example, when the number of terminals currently accessing to a cell corresponding to a base station is large, the base station can instruct a terminal to perform a L1 CLI reporting, so as to determine the subsequent interference processing logic according to a measurement report of the terminal. Optionally, a base station can activate or deactivate a L1 CLI reporting of a terminal through a high-layer signaling or a media access control-control element (Media Access Control-Control Element, MAC-CE for short).

For the convenience of description, an aperiodic L1 CLI reporting will be referred to as an aperiodic CLI reporting.

In specific implementation, the aperiodic CLI reporting method provided in the following steps S101 to S102 can be executed by a chip with a CLI reporting function in a terminal or by a baseband chip in a terminal.

Specifically, referring to FIG. 1, the aperiodic CLI reporting method described in this embodiment may include the following steps:
S101, receiving second information, where the second information includes indication information; and
S102, determining a first resource according to the indication information, where the first resource is a resource configured for aperiodic CLI measurement.

Further, the second information may be carried by downlink control information (Downlink Control Information, DCI).

For example, associated indication information for each first resource can be preconfigured at network side and one piece of the indication information is activated through the DCI. Accordingly, a terminal determines the activated indication information according to the DCI, and then determines the corresponding first resource.

Further, the indication information may be carried in a triggerstate (triggerstate) field. If the received DCI contains a triggerstate field, the terminal determines that an aperiodic CLI reporting is required.

Further, the indication information may be carried in an SRS request field (also called a sounding reference signal (Sounding Reference Signal, SRS) request field). For example, if the received DCI contains some special codepoints (codepoints) indicated by the SRS request field, the terminal determines that an aperiodic CLI reporting is required.

Further, the indication information may be carried in a CSI request field (also referred to as a channel state information (Channel State Information, CSI) request field). For example, if the received DCI contains some special codepoints (codepoints) indicated by the CSI request field, the terminal determines that an aperiodic CLI reporting is required.

Further, the first resource may be, for example, a sounding reference signal (Sounding Reference Signal, SRS) resource, a received signal strength indication (Received Signal Strength Indication, RSSI) resource.

In a specific implementation, a plurality of first resources can be configured, and each first resource can be associated with a triggerstate field (triggerstate). Then, the indication of the DCI can be configured to determine which first resource or resources the terminal needs to receive this time.

For example, in step S102, the terminal can determine the first resource needed to be received this time according to a specific value of the indication information in this DCI.

In a specific implementation, the terminal may be preconfigured with configuration information of at least one first resource and the indication information corresponding to each first resource. Alternatively, the configuration information of at least one first resource and the indication information corresponding to each first resource may also be defined according to a protocol.

In a specific implementation, before/after/at the same time of executing step S101, the method in this embodiment may further include the step of: receiving first information, where the first information includes configuration information of at least one first resource and indication information corresponding to each first resource.

Specifically, the first resource is a resource for measuring CLI, and optionally, it can be an SRS resource or an RSSI resource or other resources for CLI measurement.

In some embodiments, the first information can also configure an associated triggerstate serial number for each first resource. Then, a triggerstate serial number of a CLI resource that the terminal needs to receive can be determined through the indication of the DCI, and then the terminal needs to receive the CLI resource corresponding to the triggerstate serial number. In this embodiment, the triggerstate serial number can be understood as the indication information contained in the second information in step S101.

Further, the first information may be configured by a high-layer signaling (such as an RRC signaling) or by an MAC-CE signaling.

Further, in this specific implementation, each first resource is correspondingly configured with a triggerstate serial number.

In some embodiments, the triggerstate serial numbers of different first resources have different values.

In some embodiments, at least some of the first resources correspond to the triggerstate serial numbers of the same value. Therefore, the terminal can be scheduled to receive a plurality of first resources with less signaling overhead.

In a specific implementation, quasi co-located (quasi co-located, QCL for short) assumption or TCI status of the first resource can be configured by the base station through a high-layer signaling.

For example, QCL configuration information or TCI status of the control-resource set (control-resource set, CORESET for short) that activates the DCI can be configured.

For another example, QCL configuration information or TCI status of the default CORESET can be configured. For example, QCL configuration information or TCI status of the CORESET with the smallest index number among all CORESET configured by the base station is configured by default.

In a specific implementation, the existing second information for requesting the second resource can be configured, and codepoints can be expanded to implement an additional function of instructing the terminal to receive the first resource. The second information can be, for example, an SRS request and the second resource can be, for example, an SRS.

Specifically, codepoints (codepoints) of the second information may include a first codepoint part and a second codepoint part.

The second information of the first codepoint part includes indication information. That is, the first codepoint part are configured to indicate the first resource for the terminal to receive and perform an aperiodic CLI reporting.

The second information of the second codepoint part includes second resource request information. That is, the second codepoint part still retains the existing function for requesting the terminal to send a traditional SRS resource.

For example, the first four codepoints of the second information can be configured for traditional SRS transmission, that is, they belong to the second codepoint part. The last n codepoints are configured to receive the first resource, that is, they belonging to the first codepoint part.

Furthermore, for each codepoint among the first codepoint part, different codepoints correspond to different indication information. Accordingly, the terminal determines the first resource needed to be received this time according to the received codepoint.

In a specific implementation, a domain can be added to the existing second information configured to request the second resource to additionally indicate the first resource.

Specifically, the second information may include a first domain and a second domain, where the first domain is configured to carry indication information such as a triggerstate serial number, and the second domain is configured to carry second resource request information. Therefore, the second domain in the second information is still configured to request the terminal to send the second resource, and the added first field indicates the terminal to receive the first resource.

In a specific implementation, the function of the existing DCI can be extended by introducing a new identity to implement the indication of the first resource.

Specifically, identity can be, for example, a radio network temporary identity (Radio Network Temporary Identity, RNTI for short). According to identities associated with the second information received this time, the terminal can determine whether the second information is configured to instruct the terminal to receive the first resource or to trigger the terminal to send the second resource.

Further, the identities associated with the second information may include a first identity part and/or a second identity part.

The second information associated with the identity in the second identity part can be configured to request the terminal to send the second resource. Accordingly, the second information associated with the second identity part may include second resource request information, and may also include a transmit power control command (Transmit Power Control command, TPC command for short).

The second information associated with the identity in the first identity part can be configured to instruct the terminal to receive the first resource. Accordingly, the second information associated with the first identity part may include the indication information such as a triggerstate serial number. At this time, the second information does not need to include the TPC command, because it does not involve terminal transmission.

In some embodiments, DCI that implements a specific function can use a specific RNTI. Accordingly, the first identity part can be understood as a RNTI specially designed for DCI configured for CLI information indication.

In this specific implementation, a format of the DCI carrying the second information can be format 2-3 (format 2-3).

In a specific implementation, after step S102, the method in this embodiment may further include the steps of: receiving the first resource to perform a CLI measurement; and sending a measurement report.

Specifically, the measurement report may be a reference signal received power (Reference Signal Received Power, RSRP for short) obtained by receiving the first resource.

Thus, SRS-RSRP and CLI-RSSI for CLI measurement can be enhanced.

In a specific implementation, the measurement report of L1 CLI may belong to a part of channel state information (Channel State Information, CSI for short), such as CSI part-1 (CSI part-1). Specifically, in terms of piggyback (piggyback) of uplink control information (Uplink Control Information, UCI), the measurement report can be sent through CSI because there will be no change in payloads.

In a specific implementation, the first resource may be transmitted in a flexible slot (flexible slot).

In some embodiments, if an uplink scheduling and a downlink scheduling of the base station collide in the flexible slot, and the terminal does not detect a DCI format instructing the terminal to perform an uplink transmission, the terminal can receive a downlink transmission.

If the uplink scheduling and the downlink scheduling of the base station collide in the flexible slot, and the terminal detects a DCI format instructing the terminal to perform an uplink transmission, the terminal performs the uplink transmission.

Further, the uplink transmission performed by the terminal can be selected from physical uplink shared channel (Physical Uplink Shared Channel, PUSCH for short), physical uplink control channel (Physical Uplink Control Channel, PUCCH for short), physical random access channel (Physical Random Access Channel, PRACH for short) and SRS.

Further, the downlink transmission received by the terminal can be selected from physical downlink control channel (Physical Downlink Control Channel, PDCCH for short) and physical downlink shared channel (Physical downlink shared channel, PDSCH for short), channel state information-reference signal (Channel State Information-Reference Signal, CSI-RS for short), downlink positioning reference signal (Downlink Positioning Reference Signal, DL PRS for short) and the first resource (such as SRS for aperiodic CLI).

Therefore, by adopting this embodiment, a terminal determines the first resource configured for aperiodic CLI reporting according to the indication information, so that a terminal can truly implement L1 CLI reporting. Therefore, through the specific implementation of aperiodic L1 CLI reporting provided by this embodiment, interference in a cellular network can be effectively handled, and the communication effect of the terminal can be improved.

FIG. 2 is a schematic structural diagram of an aperiodic CLI reporting apparatus 2 according to a second embodiment of the present disclosure. It is understood by those skilled in the art that the aperiodic CLI reporting apparatus 2 described in this embodiment can be configured to implement the method technical scheme described in the embodiment described in FIG. 1 above.

Specifically, referring to FIG. 2, the aperiodic CLI reporting apparatus 2 of this embodiment may include: a receiving module 21, configured to receive second information, where the second information includes indication information; and a determining module 22, configured to determine a first resource according to the indication information, where the first resource is a resource configured for aperiodic CLI measurement.

For more information about the working principle and mode of the aperiodic CLI reporting apparatus 2, please refer to the relevant description for FIG. 1 above, and will not repeat it here.

In specific implementation, the aperiodic CLI reporting apparatus can correspond to, in a terminal, a chip with a CLI reporting function in a terminal or a chip with a data processing function, such as a system-on-a-chip (System-On-a-Chip, SOC), a baseband chip, etc.; or correspond to a chip module including a chip with a CLI reporting function in the terminal; or correspond to a chip module having a chip with a data processing function, or correspond to a terminal.

FIG. 3 is a flowchart of an aperiodic CLI reporting method according to a third embodiment of the present disclosure. This embodiment can be applied to an interference processing application scenario, specifically, it can be applied to an interference processing scenario in a cellular network using full duplex technology and/or dynamic TDD technology. On the basis of the existing periodic L3 CLI reporting, a network device adopting this embodiment triggers a terminal to additionally add an aperiodic LI CLI reporting, so as to better handle the interference of the terminal and other terminal(s)/network device(s) in the jurisdiction.

In specific implementation, the aperiodic CLI reporting method provided in the following step S301 can be executed by a chip with a CLI reporting function in a network device or by a baseband chip in a network device. The network device may be, for example, a base station such as gNB.

Specifically, referring to FIG. 3, the aperiodic CLI reporting method in this embodiment may include the following steps:
step S301, sending second information, where the second information includes indication information; where the indication information is configured to indicate a first resource, and the first resource is a resource configured for aperiodic CLI measurement.

It is understood by those skilled in the art that step S301 can be regarded as an execution step corresponding to step S101 to step S102 in the above-mentioned embodiment shown in FIG. 1, and both of them complement each other in specific implementation principle and logic. Therefore, the explanation of terms involved in this embodiment can refer to the related description of the embodiment shown in FIG. 1, and will not be repeated here.

In a specific implementation, before/after/at the same time of executing step S301, the method in this embodiment may further include the step of: sending first information, where the first information includes configuration information of at least one first resource and indication information corresponding to each first resource. Therefore, each first resource configured by a base station can be indicated to a terminal, so that the terminal can determine the first resource needed to be received this time after receiving the second information.

In a specific implementation, after step S301 is executed, the method in this embodiment may further include the steps of: sending the first resource; and receiving a measurement report. Specifically, the first resource sent may be the first resource indicated to the terminal by the indication information in step S301, that is, the first resource corresponding to the indication information. The received measurement report may be a measurement report obtained after the terminal receives the first resource and executing a CLI measurement.

From the above, by adopting this embodiment, the base station clearly indicates the indication mode of the first resource configured for aperiodic CLI reporting to the terminal by carrying the indication information in the sent second information. Therefore, through the specific implementation of aperiodic L1 CLI reporting provided by this embodiment, a terminal can correctly perform LI CLI reporting, thus effectively handling interference in a cellular network and improving the communication effect of the terminal.

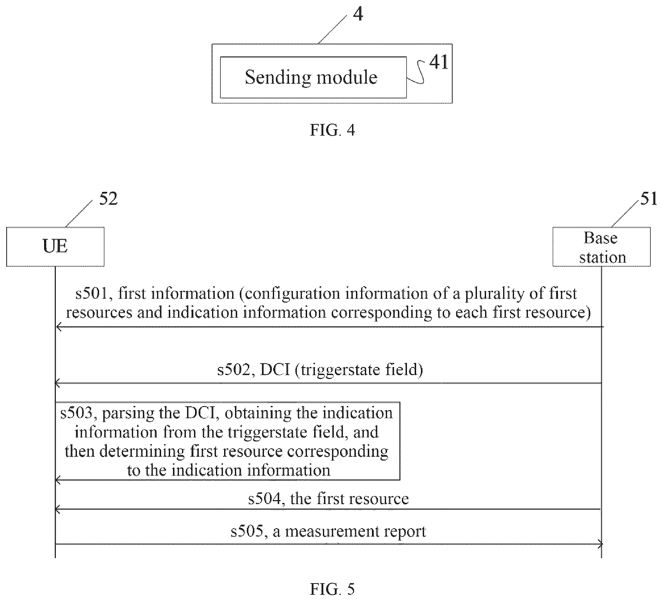

FIG. 4 is a schematic structural diagram of an aperiodic CLI reporting apparatus 4 according to a fourth embodiment of the present disclosure. It is understood by those skilled in the art that the aperiodic CLI reporting apparatus 4 described in this embodiment can be configured to implement the method technical scheme described in the embodiment described in FIG. 3 above.

Specifically, referring to FIG. 4, the aperiodic CLI reporting apparatus 4 of this embodiment may include: a sending module 41 configured to send second information, where the second information includes indication information, where the indication information is configured to indicate a first resource, and the first resource is a resource configured for aperiodic CLI measurement.

For more information about the working principle and mode of the aperiodic CLI reporting apparatus 4, please refer to the relevant description for the above-mentioned FIG. 3, which will not be repeated here.

In a specific implementation, the aperiodic CLI reporting apparatus can correspond to, in a network device, a chip with a CLI reporting function or a chip with a data processing function, such as a system-on-a-chip (System-On-a-Chip, SOC for short) and a baseband chip; or correspond to, in a network device, a chip module including a chip with a CLI reporting function; or correspond to a chip module having a chip with a data processing function, or correspond to a network device.

In a specific implementation, each of the modules/units included in the apparatuses and products described in the above embodiments can be a software module/unit, a hardware module/unit, or partly be a software module/unit and partly be a hardware module/unit.

For example, for each apparatus or product applied to or integrated in a chip, all the modules/units contained in it can be implemented in the form of hardware such as circuits, or at least some modules/units can be implemented in the form of software programs, where the software programs run on a processor integrated in a chip, and the remaining (if any) modules/units can be implemented in the form of hardware such as circuits. For each apparatus or product applied to or integrated in a chip module, each module/unit contained in it can be implemented in the form of hardware such as circuits, and different modules/units can be located in the same component (such as a chip and a circuit module, etc.) or different components of the chip module, or at least some modules/units can be implemented in the form of software programs where the software programs run on a processor integrated in the chip module, and the remaining (if any) modules/units can be implemented in the form of hardware such as circuits. For each apparatus or product applied to or integrated in a terminal, each module/unit contained in it can be implemented in the form of hardware such as circuits, and different modules/units can be located in the same component (such as a chip and a circuit module, etc.) or different components in the terminal, or at least some modules/units can be implemented in the form of software programs, where the software programs run on a processor integrated in the terminal, and the remaining (if any) modules/units can be implemented in the form of hardware such as circuits.

In a typical application scenario, referring to FIG. 5, a base station 51 may perform operation s501 to send first information, where the first information includes configuration information of a plurality of first resources and indication information corresponding to each first resource. Accordingly, a UE 52 receives the first information.

Then, the base station 51 may perform operation s502 to send DCI, where the DCI includes a triggerstate field (triggerstate). Accordingly, the UE 52 receives the DCI.

Next, the UE 52 performs operation s503 to parse the DCI, obtain the indication information from the triggerstate field, and then determine first resource corresponding to the indication information. For example, whether second information (specifically DCI in this example) is configured to instruct the UE 52 to receive the first resource can be determined according to codepoints used by the DCI, and when it is determined that the first resource needs to be received, the indication information can be obtained from the triggerstate field and the corresponding first resource can be determined. For another example, indication information can be obtained from a first domain in the DCI, and the corresponding first resource can be determined. For yet another example, it can be determined whether the DCI is configured to instruct the UE 52 to receive the first resource according to a RNTI that successfully parses the DCI, and when it is determined that the first resource needs to be received, the indication information can be obtained from the triggerstate field and the corresponding first resource can be determined.

Then, the UE 52 performs operation s504 to receive the first resource determined in operation s502. Accordingly, the base station 51 sends the first resource.

Finally, the UE52 performs operation s505 to generate a measurement report according to the reception of operation s504 and report it to the base station 51. Accordingly, the base station 51 receives the measurement report.

In a variation, if it is determined by parsing the DCI in operation s502 that the codepoints used by the DCI indicates that the DCI is configured to instruct the UE 52 to send a second resource, operations s502 to s505 may be omitted. Further, the UE 52 can send the second resource, so that terminals located around the UE 52 receives SRS resources, and accordingly determines whether the UE 52 causes interference to itself.

Alternatively, if it is determined by parsing the DCI in operation s502 that the RNTI of parsing the DCI indicates that the DCI is configured to instruct the UE 52 to send a second resource, operations s502 to s505 may be omitted. Further, the UE 52 can send the second resource, so that terminals located around the UE 52 receives SRS resources, and accordingly determines whether the UE 52 causes interference to itself.

The embodiment of the present disclosure also provides a computer-readable storage medium, which is a nonvolatile storage medium or a non-transient storage medium, on which a computer program is stored, and when the computer program is run by a processor, the steps of the aperiodic CLI reporting method provided by the embodiment shown in FIG. 1 or FIG. 3 are executed. Preferably, the storage medium may include a computer-readable storage medium such as a non-volatile (non-volatile) memory or a non-transitory (non-transitory) memory. The storage medium may include ROM, RAM, a magnetic disk or an optical disk, etc.

An embodiment of the present disclosure also provides another aperiodic CLI reporting apparatus, including a memory and a processor, where a computer program which can be run on the processor is stored in the memory, and when the processor runs the computer program, the steps of the aperiodic CLI reporting method provided in the corresponding embodiment of FIG. 1 are executed. The aperiodic CLI reporting apparatus may be integrated into a terminal, or the aperiodic CLI reporting apparatus may be, for example, a terminal.

An embodiment of the present disclosure also provides another aperiodic CLI reporting apparatus, including a memory and a processor, where a computer program which can be run on the processor is stored in the memory, and when the processor runs the computer program, the steps of the aperiodic CLI reporting method provided in the corresponding embodiment of FIG. 3 are executed. The aperiodic CLI reporting apparatus may be integrated into a network device, or the aperiodic CLI reporting apparatus may be, for example, a network device.

A terminal (terminal) in the embodiment of the present disclosure is a device with a wireless communication function, which can be called a user, a user terminal, a terminal device, a mobile station (mobile station, MS), a mobile terminal (mobile terminal, MT), an access terminal device, a vehicle-mounted terminal device, an industrial control terminal device, and a user equipment (User Equipment, UE for short), a UE unit, a UE station, a mobile station, a remote station, a remote terminal device, a mobile device, a UE terminal device, a wireless communication device, a UE agent or UE apparatus, etc. A user terminal can be fixed or mobile. It should be noted that the user terminal can support at least one wireless communication technology, such as long term evolution (Long Term Evolution, LTE) and new radio (new radio, NR), etc. For example, the user terminal can be a mobile phone (mobile phone), a pad (pad), a desktop, a notebook computer, an all-in-one machine, a vehicle-mounted terminal, a virtual reality (virtual reality, VR) terminal device, an augmented reality (augmented reality, AR) terminal device, a wireless terminal in industrial control, a wireless terminal in self driving, a wireless terminal in remote medical surgery (remote medical surgery), a wireless terminal in smart grid (smart grid), and a wireless terminal for transportation safety (transportation safety), a wireless terminal in smart city (smart city), a wireless terminal in smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device with a wireless communication function, a computing device or other processing device connected to a wireless modem, a wearable device, a terminal device in future mobile communication network or a terminal device in future evolved public land mobile network (public land mobile network, PLMN), etc. In some embodiments of the present disclosure, the user terminal may also be an apparatus with a transceiving function, such as a chip system. The chip system can include a chip and other discrete equipment.

A network device in an embodiment of the present disclosure is a device that provides a wireless communication function for a user terminal, and can also be called an access network device, a radio access network (radio access network, RAN) device, or an access network element, etc. A network device can support at least one wireless communication technology, such as LTE, NR, etc. For example, the network device includes, but are not limited to, a next generation nodeB (generation nodeB, gNB) in the 5th-generation(5th-generation, 5G), an evolved node B (evolved node B, eNB), a radio network controller (radio network controller, RNC), a node B(node B, NB), a base station controller (base station controller, BSC), a base transceiver station (base transceiver station, BTS), a home base station (e.g., home evolved node B or home node B, HNB), a baseband unit (baseband unit, BBU), a transmitting and receiving point (transmitting and receiving point, TRP), a transmitting point (transmitting point, TP), a mobile switching center, etc. The network device can also be a wireless controller, a centralized unit ((centralized unit, CU) and/or a distributed unit (distributed unit, DU) in a cloud radio access network (cloud radio access network, CRAN) scenario, or the access network device can be a relay station, an access point, a vehicle-mounted device, a terminal device, a wearable device, a network device in future mobile communication or a network device in future evolved PLMN, etc. In some embodiments, the network device can also be an apparatus with the function of providing wireless communication for a user terminal, such as a chip system. For example, a chip system may include a chip and other discrete equipment.

Although the present disclosure is disclosed above, the present disclosure is not limited thereto. Any person skilled in the art can make various changes and modifications without departing from the spirit and scope of the present disclosure, so the scope of protection of the present disclosure should be based on the scope defined by the claims.

## Claims

1. An aperiodic CLI reporting method, comprising:
receiving second information, wherein the second information comprises indication information; and
determining a first resource according to the indication information, wherein the first resource is a resource configured for aperiodic CLI measurement.

2. The method according to claim 1, wherein the indication information is in one-to-one correspondence with the first resource.

3. The method according to claim 1 or 2, further comprising:
receiving first information, wherein the first information comprises configuration information of at least one first resource and indication information corresponding to each first resource.

4. The method according to claim 1, wherein codepoints of the second information comprise a first codepoint part and a second codepoint part, wherein the second information of the first codepoint part comprises the indication information.

5. The method according to claim 4, wherein the second information of the second codepoint part comprises second resource request information.

6. The method according to claim 1, wherein the second information comprises a first domain and a second domain, wherein the first domain is configured to carry the indication information.

7. The method according to claim 6, wherein the second domain is configured to carry second resource request information.

8. The method according to claim 1, wherein identities associated with the second information comprises a first identity part and a second identity part, wherein the second information associated with the first identity part comprises the indication information.

9. The method according to claim 8, wherein the second information associated with the second identity part comprises second resource request information and a transmit power control command.

10. The method according to any one of claims 1 to 9, further comprising:
receiving the first resource to perform a CLI measurement; and
sending a measurement report.

11. The method according to any one of claims 1 to 9, wherein the second information is carried by a high-layer signaling or an MAC-CE or DCI.

12. The method according to any one of claims 1 to 9, wherein the first resource is transmitted in a flexible slot.

13. An aperiodic CLI reporting apparatus, comprising:
a receiving module, configured to receive second information, wherein the second information comprises indication information; and
a determining module, configured to determine a first resource according to the indication information, wherein the first resource is a resource configured for aperiodic CLI measurement.

14. An aperiodic CLI reporting method, comprising:
sending second information, wherein the second information comprises indication information;
wherein the indication information is configured to indicate a first resource, and the first resource is a resource configured for aperiodic CLI measurement.

15. The method according to claim 14, wherein the indication information is in one-to-one correspondence with the first resource.

16. The method according to claim 14 or 15, further comprising:
sending first information, wherein the first information comprises configuration information of at least one first resource and indication information corresponding to each first resource.

17. The method according to claim 14, wherein codepoints of the second information comprise a first codepoint part and a second codepoint part, wherein the second information of the first codepoint part comprises the indication information.

18. The method according to claim 17, wherein the second information of the second codepoint part comprises second resource request information.

19. The method according to claim 14, wherein the second information comprises a first domain and a second domain, wherein the first domain is configured to carry the indication information.

20. The method according to claim 19, wherein the second domain is configured to carry second resource request information.

21. The method according to claim 14, wherein identities associated with the second information comprises a first identity part and a second identity part, wherein the second information associated with the first identity part comprises the indication information.

22. The method according to claim 21, wherein the second information associated with the second identity part comprises second resource request information and a transmit power control command.

23. The method according to any one of claims 14 to 22, further comprising:
sending the first resource; and
receiving a measurement report.

24. The method according to any one of claims 14 to 22, wherein the second information is carried by a high-layer signaling or an MAC-CE or DCI.

25. The method according to any one of claims 14 to 22, wherein the first resource is transmitted in a flexible slot.

26. An aperiodic CLI reporting apparatus, comprising:
a sending module, configured to send second information, wherein the second information comprises indication information;
wherein the indication information is configured to indicate a first resource, and the first resource is a resource configured for aperiodic CLI measurement.

27. A computer-readable storage medium which is a non-volatile storage medium or a non-transient storage medium, on which a computer program is stored, wherein the computer program, when executed by a processor, performs the steps of the method according to any one of claims 1 to 12 or any one of claims 14 to 25.

28. An aperiodic CLI reporting apparatus, comprising a memory and a processor, wherein a computer program which is able to be run on the processor is stored in the memory, the processor executes the steps of the method in any one of claims 1 to 12 or any one of claims 14 to 25 when running the computer program.
